# EUROPEAN PATENT APPLICATION

(11) **EP 2 090 791 A2**
(43) Date of publication of application: **19.08.2009**
(21) Application number: 09445004.6
(22) Date of filing: 10.02.2009
(51) Int. Cl.: F16B 11/00, F16B 43/02

(54) **Fastening**

(30) Priority: 12.02.2008 SE 0800312
(71) Applicant: Demerx i Kinda AB, 590 40 Kisa (SE)
(72) Inventor: Hoffberg, Robert, 590 40 Kisa (SE)
(74) Representative: Berglund, Erik Wilhelm

(57) **Abstract**

Method for fastening larger and heavier objects to a wall, in particular tiles in a wet or moist environment, by means of several brackets. One or several brackets include a plane part (1) provided with adhesive tack (11) or glue, and a lockable angular joint (2-10). The angular joints are locked after pressing the object with its brackets against the wall so that each plane part is angularly adjusted to the local angle of the wall surface.

## Description

This invention concerns a method and a bracket or fastening, for instance for baskets, shelves, hangers, small cabinets and the like, in particular in wet environments as bathrooms, showers etcetera on tiles or plastic wall coverings or panels.

In wet or moist areas it is very important that moisture is prevented from penetrating into the walls. In view of this screws, for which you have to drill and seal holes, are not wanted. It is easy to forget the sealing measures and the sealing material may also desiccate and let moisture in. Leakage may also develop or be increased by movements in the fastening, for instance due to play, drying etcetera. The result is damages due to humidity. Problems of this type are incredibly frequent, which in particular can be attested by the insurance companies. For the hanging of lighter objects, as for instance towels and the like one can consider brackets that are glued with double-stick tape or fastened with adhesive tack to the wall. For a bit larger and heavier objects as for instance shower baskets however it is not so easy to solve the problem without drilling holes in the wall since it in reality has turned out that glued brackets can note take the weight, not even if one arrange several individual brackets.

The object of the invention is to solve the above problem, so that also heavier objects can be hung up on tiles, wallpaper or plastic covering for wet areas etcetera without any drilling of holes.

The above object is solved in accordance with the invention by the use of several brackets of which one or several or alternatively all having fastening plates that are angularly adjustable relative the object that is to be suspended and can be fixed in the adjusted position.

Advantageously the fastening plates or discs are fastened by means of adhesive tack, glue or the like to the wall.

The use of several fastening points or areas alone does not give a sufficient adherence, while the invention provides a considerably stronger adherence.

The reason why the simple use of several brackets only does not become strong enough is reasonably that the uneven substrate, as for instance a tiled wall, is not sufficiently plane for all brackets to obtain full contact. Some of the brackets get a good grip while others may become pretensioned or maybe don't grip anything to talk of or perhaps only along an edge or a small part of its area. By the angular adjustment however each brackets can be adjusted to be parallel with the underlying surface and be in contact with the substrate so that large forces can transferred and heavier objects be hung up reliably.

In order to achieve said angular adjustment a further development of the invention is suggested where the bracket comprise a flat part for fastening to a substrate by means of adhesive tack or double adhesive tape and an angular joint with a comparatively small adjustment ability as to the angle, but sufficient to allow the compensating of in different directions slightly differently angled tiles. Since the required angular adjustment is small the angular joint may be made almost unnoticeable and still be sufficient to allow each brackets to adapt to the local angles of the substrate. Since all brackets obtain a good grip a good fastening and a great possible weight transfer can be secured in a quite different and more efficient way than before.

In a preferable embodiment the brackets comprise a plate or disc that has been shaped with a recess with part spherical shape. On the opposite side of the plate a part spherical dome or cupola is arranged, having the same centre for its shape as the surface of the depression. On the depression side of the plate an adhesive tack layer is arranged for fastening to a wall. Centrally in the depression there is a hole that extend through this and out on the dome side. In the depression a first clamping body is arranged and on the side of the dome a second clamping body is arranged, preferably with a shape corresponding to the inside of the depression and outside of the dome respectively. Force transferring means for instance in the shape of screw and nut may be used extending between the clamping bodies through the hole in the bottom of the depression.

When the clamping bodies are tightened against each other they are fixed and the plate is fixed in relation to a basket or the like that may be fastened to the clamping body on the dome side. In this way the connection will be inelastic and occurring forces that either try to pull the plate away from the wall or push this will be evenly distributed over the entire area of the plate, since the plate is pulled perpendicularly out from the wall or in parallel with the wall respectively.

Since the required angle normally will be only a few degrees the depression can both be made comparatively shallow and with modest diameter, the latter being desirable in order to achieve a good contact area for the adhering to the substrate.

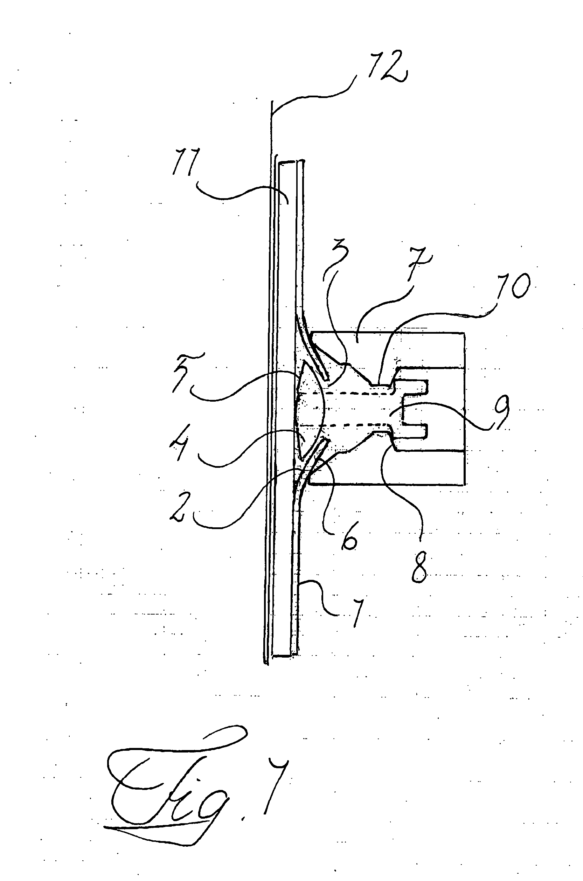

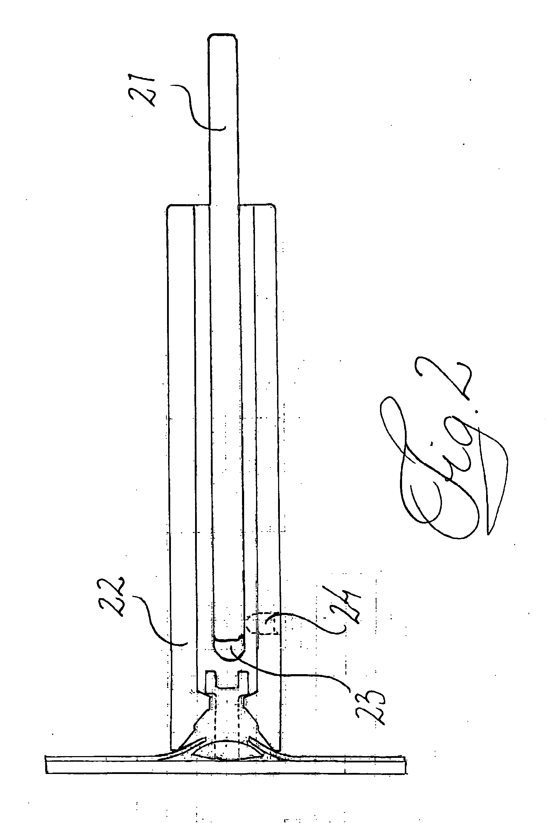

Further advantages and characteristics of the invention are apparent from the claims and the following description of embodiments of the invention with reference to enclosed drawings. In the drawings fig. 1 depicts enlarged a fastening device in accordance with the invention in a cross section and fig. 2 a variation thereof intended for a glass shelf.

The bracket shown in fig 1 comprise a plate 1, which is provided with a depression 2 with a hole 3 in the centre. The depression has the shape of a part spherical surface and in the depression a nut part 4 is arranged also with a part spherical surface facing the spherical depression and adapted to this. On its opposite side the nut part is conical. On the side opposite to the depression side there is a protrusion or cupola like part 6 corresponding to the depression and with a part spherical shape. Against the protrusion a short tube like distance element 7 rests, that internally is provided with a flange 8. A screw 9 extends through a hole 10 in the centre left by the flange, further through the hole 3 in the depression 2 in the plate and is threaded in the nut part 4. When the screw is tightened the nut part and the distance element will between them clamp up the plate so that the distance element, the screw and the nut part become fixed in their position relative the plate.

Since the required angle for the adaptation of the fastening plate to the substrate is small the depression in the plate can be made very shallow and with a moderate diameter, which in turn means that the tube shaped distance element can also be made comparatively small and short. Due also to the conical side of the nut part, at use facing the wall, a low profile can be obtained despite the obtaining of a sufficient length of thread in the nut part. On the wall side of the plate a layer 11 of adhesive tack is placed provided with a protective layer 12 that is removed at application. By choosing a slightly plastic adhesive tack instead of a tape it is possible to obtain a certain additional adaptation to a possible uneven or structured substrate as well as slightly varying distances from the brackets to the wall.

When a shelf in accordance with the invention is to be installed on a wall the screws in the brackets are preferably loosened somewhat so that the fastening plates can adapt to the local angles of the wall surface. With the protective papers in place on the adhesive tack coating on the plates the basket is moved to the desired position in height, laterally and angle. In this position the protective papers are removed one by one, which can be facilitated by the protective papers 12 being folded double. Thereafter the positions of the plates are fixed by tightening the screws. The shelf is now seated rigidly in place with an efficient utilizing of the fastening areas of all the fastening plates.

Since the layer of adhesive tack extend over the depression the nut part is held in place and at mounting also the contact of the adhesive tack with the nut part may further contribute to the force transfer to the wall.

The bracket in accordance with the invention may advantageously be made of stainless steel with the plate made from stainless steel sheet, in which a depression has been made. Screw and distance piece may also be of stainless steel, as well as of course the shower basket. The nut part may possibly be made of brass. Since stainless steel normally is rather soft it has the tendency of being self-locking. Alternatively one can consider some of the parts or all being made of plastic.

The invention thus enables a fastening also of comparatively large installations in wet or moist areas without destroying the water sealing membranes in the wall. At the change of use or for other reasons the brackets can be removed. The brackets can be provided with new layers of adhesive tack and reused at some other location.

At shelves that for instance essentially exist of a glass plate, as shown in fig 2, the glass plate may be adjusted to its inclination, level or some other angle by means of individual brackets in accordance with the invention. In the version shown in fig. 2 the distance piece 22 is extended and slotted 23 for the receiving of the glass plate 21. At a long glass plate more than two brackets may be used. The glass plate 21 is fixed by means of a stop screw 24 at the bottom side of each extended distance element. Since the glass plate can be placed differently far out from the wall even large variations in the depth direction of the wall can be compensated for. This or similar fixings can be used to make the brackets according to the invention even more adaptable to uneven substrates.

## Claims

1. Method for fastening larger and heavier objects to a wall in a wet or moist environment by means of several brackets without holes through the wall, **characterized in that** one or several bracket, possibly all include a plane part (1) provided with adhesive tack (11) or glue, and a lockable angular adjustment (2-10) that is fixed after pressing the object with its brackets against the wall.

2. Method according to claim 1, **characterized in** said adhesive tack (11) being covered by a protective layer (12) folded double that is pulled away after placing the object at its intended location.

3. Method according to claim 1 or 2, **characterized in that** the brackets are fastened one at a time and fixed to their angle before the next bracket is fastened and locked.

4. Device for fastening larger and heavier objects to a wall in a wet or moist environment by means of several brackets without holes through the wall covering, **characterized in that** one or several brackets, possibly all include a plane part (1) provided with adhesive tack (11) or glue, and an angularly adjustable and lockable joint.

5. Bracket for in particular wet areas, **characterized in that** it comprises a plate (1) that has been provided with a depression (2) with part spherical form, on the opposite side a part spherical cupola (6) is arranged with the same centre for its spherical shape as for the surface of the depression, on the depression side of the plate an adhesive tack layer (11), glue or the like is arranged for the fastening on a wall, in the centre of the depression there is a hole (3) extending through this and out on the cupola side, in the depression a first clamping body (4) is arranged and on the side of the cupola a second clamping body (7) is arranged, preferably with a shape corresponding to the inner of the depression and the outer shape of the cupola respectively, force transferring means are arranged for locking of the clamping bodies and the plate relative each other.

6. Bracket according to claim 5, **characterized in that** the clamping body (4) in the recess (2) of the plate is provided with a threaded hole into which a screw (9) can be threaded

7. Bracket according to claim 5 or 6, **characterized in** said first clamping body being conical on the side (5) opposed to the part spherical side.
